# EUROPÄISCHE PATENTANMELDUNG

(11) **EP 0 588 231 A1**
(43) Veröffentlichungstag der Anmeldung: **23.03.1994**
(21) Anmeldenummer: 93114454.7
(22) Anmeldetag: 09.09.1993
(51) Int. Cl.: B66B 3/02, G09B 21/00

(54) **Kabinenpositionsanzeiger für eine Aufzugskabine**

(30) Priorität: 17.09.1992 US 946880
(71) Anmelder: INVENTIO AG, CH-6052 Hergiswil NW (CH)
(72) Erfinder: Gustafson, Gordon E., Verona, New Jersey 07044 (US)

(57) **Zusammenfassung**

Mit diesem Kabinenpositionsanzeiger kann ein blinder Fahrgast in der Aufzugskabine die jeweilige Kabinenposition durch Abtasten feststellen. Zu diesem Zweck sind an einer Frontplatte (1) des Kabinentableaus (2) in der Konfiguration der Blindenschrift angeordnete Tastelemente in Form von verschiebbaren Anzeigebolzen (4) vorgesehen. Die Anzeigebolzen (4) sind mit Ankern (5) von Elektromagneten (6) verbunden und werden in Bohrungen (3) der Frontplatte (1) geführt. Die Elektromagnete (6) sind über eine Steuerschaltung an einer Kodierschaltung angeschlossen, welcher die Kabinenposition zugeführt wird, wobei die Kabinenposition in die entsprechende Zahl in Blindenschrift umgewandelt wird und die betreffenden Anzeigebolzen (4) aus der Frontplatte (1) herausgeschoben werden.

## Beschreibung

Die Erfindung betrifft einen Kabinenpositionsanzeiger für eine Aufzugskabine mit einer Kodierschaltung, die eingangsseitig über Adressenleiter zwecks Zuführung der jeweiligen Kabinenposition mit einer Aufzugssteuerung verbunden ist.

In den Aufzugskabinen angeordnete Kabinenpositionsanzeiger bestehen meistens aus Leuchtdioden, die an den Kreuzungspunkten einer Punktmatrix angeordnet sind, oder auch aus 7-Segment-Anzeigen, wobei die Positionsinformation beispielsweise im Dualcode erzeugt und geeigneten, mit der Punktmatrix bzw. der 7-Segment-Anzeige verbundenen Kodierschaltungen zugeführt wird. Da es sich hierbei um optische Anzeigen handelt, sind derartige Kabinenpositionsanzeiger nicht für sehbehinderte bzw. blinde Fahrgäste geeignet.

Mit der US-A - 4 742 198 und der EP-A-0 446 487 sind Drucktastenschalter bekannt geworden, die beispielsweise für Aufzugskabinen verwendet werden können. Hierbei ist an den Drucktasten unterhalb der das jeweilige Stockwerk bezeichnenden Zahl die gleiche Zahl in Blindenschrift angebracht, so dass blinde Fahrgäste Rufe für das gewünschte Stockwerk eingeben können. Es ist weiterhin bekannt, dass auf den Stockwerken in Nähe der Aufzugstüren Schilder mit der Stockwerknummer in Blindenschrift angeordnet sind. Bei dieser Sachlage muss ein blinder Fahrgast, wenn er feststellen will ob das gewünschte Stockwerk erreicht ist, bei jedem Halt auf einem Stockwerk von der Kabine aus das auf dem Stockwerk angebrachte Schild abtasten, oder er muss die gegebenenfalls jeweils beim Vorbeifahren an einem Stockwerk ertönenden akustischen Signale mitzählen.

Der Erfindung liegt die Aufgabe zugrunde einen in einer Aufzugskabine angeordneten Kabinenpositionsanzeiger für blinde Fahrgäste vorzuschlagen, so dass vorstehend beschriebene Nachteile vermieden werden.

Diese Aufgabe wird durch die im Patentanspruch 1 gekennzeichnete Erfindung gelöst. Hierbei sind an einer Frontplatte des Kabinentableaus in der Konfiguration der Blindenschrift angeordnete Tastelemente in Form von verschiebbaren Anzeigebolzen vorgesehen. Die Anzeigebolzen sind mit Ankern von Elektromagneten verbunden und werden in Bohrungen der Frontplatte geführt. Die Elektromagnete sind über eine Steuerschaltung an einer Kodierschaltung angeschlossen, welcher die Kabinenposition zugeführt wird, wobei die Kabinenposition in die entsprechende Zahl in Blindenschrift umgewandelt wird und die betreffenden Anzeigebolzen aus der Frontplatte herausgeschoben werden.

Der mit der Erfindung erzielte Vorteil ist darin zu sehen, dass ein blinder Fahrgast jederzeit die momentane Kabinenposition abtasten kann, ohne dass er bei einem Halt auf einem Stockwerk aus der Kabine heraus das auf dem Stockwerk angebrachte Schild abtasten muss, oder jeden Stockwerkwechsel mitzählen muss.

Im folgenden wird die Erfindung anhand eines auf der Zeichnung dargestellten Ausführungsbeispieles näher erläutert.
Es zeigen:
- Fig. 1: eine teilweise geschnittene Seitenansicht des erfindungsgemässen Kabinenpositionanzeigers,
- Fig. 2: eine Ansicht des Kabinenpositionsanzeigers gemäss Fig.1, und
- Fig. 3: ein Prinzipschema einer Steuerschaltung des Kabinenpositionsanzeigers gemäss Fig. 1.

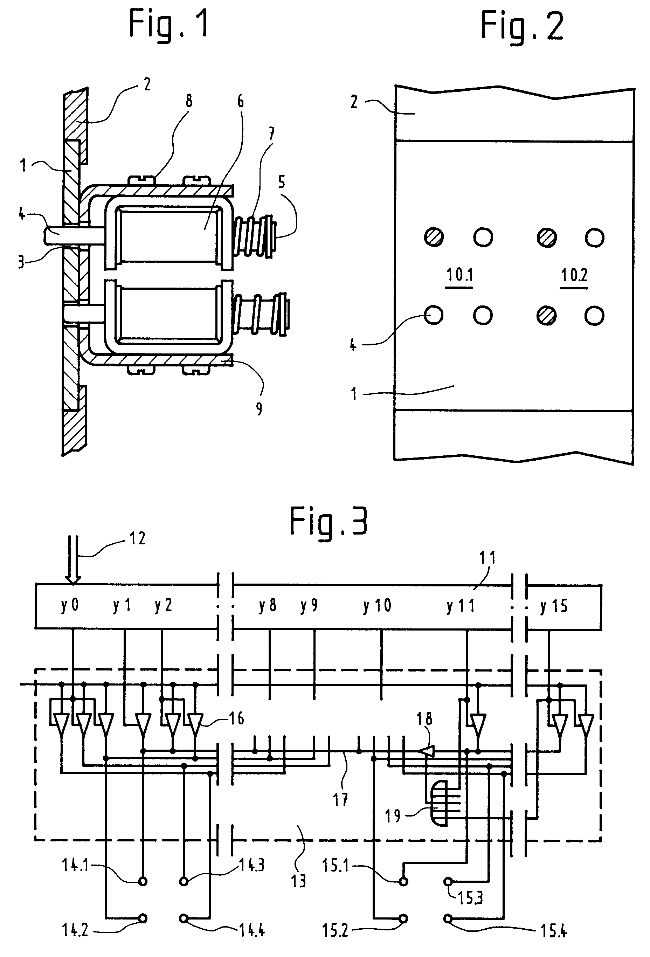

In den Fig. 1 und 2 ist mit 1 eine Frontplatte bezeichnet, die an einem Kabinentableau 2 befestigt ist. In Bohrungen 3 der Frontplatte 1 werden in der Konfiguration der Blindenschrift angeordnete Tastelemente in Form von Anzeigebolzen 4 verschiebbar geführt. Da für die Darstellung einer einstelligen Zahl in Blindenschrift lediglich vier Tastelemente erforderlich sind, ist die Konfiguration ein Quadrat an dessen Ecken die Anzeigebolzen 4 angeordnet sind. Die Anzeigebolzen 4 sind mit Ankern 5 von Elektromagneten 6 verbunden, wobei der Anzeigebolzen 4 und der Anker 5 durch eine Feder 7 in einer Ruhelage gehalten werden. Die Elektromagneten 6 sind mittels Schrauben 8 an einem Montagebügel 9 angeschraubt, der an der Rückseite der Frontplatte 1 befestigt ist. Die Anzeigebolzen 4 sind so bemessen, dass sie bei Erregung der Elektromagnete 6 aus den Bohrungen 3 um einen bestimmten Betrag herausgeschoben werden. In der Ruhelage liegen die Stirnseiten der Anzeigebolzen 4 in gleicher Ebene wie die Vorderseite der Frontplatte 1. Zwecks Anzeige einer zweistelligen Zahl sind zwei 4er-Gruppen 10.1, 10.2 Anzeigebolzen 4 bzw. Elektromagnete 6 vorgesehen, wobei beispielsweise bei der Anzeige des Stockwerkes 12 gemäss Blindenschrift die schraffiert gekennzeichneten Anzeigebolzen 4 hervorstehen (Fig. 2).

Gemäss Fig. 3 ist eine Kodierschaltung 11 eingansseitig an Adressenleitern 12 angeschlossen, die mit einer nicht dargestellten Aufzugssteuerung in Verbindung stehen. Die Kodierschaltung 11 ist beispielsweise ein 1-aus-n-Kodierer, der bei wie im Ausführungsbeispiel angenommen, sechzehn Stockwerken und 4-bit-Adressen, sechzehn Ausgänge y0 bis y15 aufweist. Die Ausgänge y0 bis y15 sind über eine Steuerschaltung 13 mit Steueranschlüssen 14.1-14.4 und 15.1-15.4 für nicht weiter beschriebene, allgemein bekannte Leistungsschaltkreise der in 4er-Gruppen 10.1, 10.2 angeordneten Elektromagnete 6 verbunden. Die Steuerschaltung 13 besteht aus Schaltgliedern, beispielsweise in Form von Tristate-Buffern 16, deren Aktivierungsanschlüsse mit den Ausgängen y0 bis y15 der Kodierschaltung 11 verbunden sind. Die Eingänge der Tristate-Buffer 16 sind an einer nicht dargestellten Spannungsquelle angeschlossen, während die Ausgänge mit den jeweils zugeordneten Steueranschlüssen 14.1-14.4 und 15.1-15.4 in Verbindung stehen. Die Anzahl der pro Ziffer bzw. Ausgang der Kodierschaltung 11 benötigten Tristate-Buffer 16 ist gleich der Anzahl der der jeweiligen Ziffer in Blindenschrift zugeordneten Anzeigebolzen 4. Hierbei werden zum Beispiel für die Darstellung der Ziffer 2 in Blindenschrift zwei Tristate-Buffer 16 benötigt, deren Ausgänge mit den Steueranschlüssen 14.1 und 14.2 verbunden sind. Die Steueranschlüsse 14.1 und 15.1 der Ziffer 1 beider 4er-Gruppen 10.1, 10.2 sind über einen Leiter 17 miteinander verbunden. Dadurch ist gewährleistet, dass bei der Anzeige der Zahlen 10 bis 15 auch der der Ziffer 1 zugeordnete Anzeigebolzen 4 der ersten 4er-Gruppe 10.1 betätigt wird. Um zu verhindern, dass bei Anzeige der Zahlen 1 bis 8 über den Leiter 17 auch der der Ziffer 1 zugeordnete Anzeigebolzen 4 der zweiten 4er-Gruppe 10.2 betätigt wird, ist im Leiter 17 zwischen den Anschlüssen für die Ziffern 10 und 11 ein Sperrglied in Form eines weiteren Tristate-Buffers 18 vorgesehen. Der Aktivierungsanschluss des weiteren Tristate-Buffers 18 ist mit dem Ausgang eines ODER-Gatters 19 verbunden, dessen Eingänge an den Ausgängen y11-y15 der Kodierschaltung 11 angeschlossen sind.

Der vorstehend beschriebene Kabinenpositionsanzeiger arbeitet wie folgt:
Bei der Fahrt der Aufzugskabine werden den aufeinanderfolgenden Stockwerken entsprechende 4-bit-Adressen im Dualcode gebildet und der Kodierschaltung 11 zugeführt. Für die Bildung der Stockwerkadresse können hierbei in ähnlicher Form beispielsweise Einrichtungen verwendet werden, wie sie mit der EP-A-0 197 252 oder der DE-B- 28 32 973 bekannt geworden sind. Nun sei angenommen, dass die Kabine in Aufwärtsrichtung vom Stockwerk 11 abfährt und die Adresse 1100 für Stockwerk 12 gebildet wird. Hierbei wird der Ausgang y12 des 1-aus-n-Kodierers 11 logisch "1", so dass die zugeordneten Tristate-Buffer 16 aktiviert werden. Damit werden der der Ziffer 1 zugeordnete Elektromagnet 6 der ersten 4er-Gruppe 10.1 über den Steueranschluss 14.1, und die der Ziffer 2 zugeordneten Elektromagnete 6 der zweiten 4er-Gruppe 10.2 über die Steueranschlüsse 15.1 und 15.2 erregt. Dadurch werden die zugeordneten Anzeigebolzen 4 aus den Bohrungen 3 der Montageplatte 1 herausgeschoben und können so von blinden Fahrgästen abgetastet und als Zahl 12 erkannt werden.

## Patentansprüche

1. Kabinenpositionsanzeiger für eine Aufzugskabine, mit einer Kodierschaltung (11), die eingangsseitig über Adressenleiter (12) zwecks Zuführung der jeweiligen Kabinenposition mit einer Aufzugssteuerung verbunden ist,
dadurch gekennzeichnet,
- dass an einer Frontplatte (1) eines Kabinentableaus (2) in der Konfiguration der Blindenschrift angeordnete Tastelemente in Form von verschiebbaren Anzeigebolzen (4) vorgesehen sind,
- dass die Anzeigebolzen (4) mit Ankern (5) von Elektromagneten (6) verbunden sind und in Bohrungen (3) der Frontplatte (1) geführt werden,
- dass eine Steuerschaltung (13) vorgesehen ist, die eingangsseitig mit Ausgängen (y0-y15) der Kodierschaltung (11) und ausgangsseitig mit Steueranschlüssen (14.1-14.4 bzw. 15.1-15.4) der Elektromagnete (6) verbunden ist,
- wobei die Kabinenposition in die entsprechende Zahl der Blindenschrift umgewandelt wird und die zugeordneten Anzeigebolzen (4) aus der Frontplatte (1) herausgeschoben werden.

2. Kabinenpositionsanzeiger nach Patentanspruch 1,
dadurch gekennzeichnet,
- dass die Steuerschaltung (13) Schaltglieder in Form von Tristate-Buffern (16) aufweist, deren Aktivierungsanschlüsse mit den Ausgängen (y0-y15) der Kodierschaltung (11) verbunden sind,
- dass die Anzahl der pro Ziffer bzw. Ausgang der Kodierschaltung (11) benötigten Tristate-Buffer (16) gleich der Anzahl der der jeweiligen Ziffer in Blindenschrift zugeordneten Anzeigebolzen (4) ist, und
- dass die Eingänge der Tristate-Buffer (16) an einer Spannungsquelle, und die Ausgänge an den jeweils zugeordneten Steueranschlüssen (14.1-14.4 bzw. 15.1-15.4) angeschlossen sind.

3. Kabinenpositionsanzeiger nach Patentanspruch 2,
dadurch gekennzeichnet,
dass für die Anzeige einer zweistelligen Zahl zwei 4er-Gruppen (10.1, 10.2) Anzeigebolzen (4) bzw. Elektromagnete (6) vorgesehen sind, wobei die Steueranschlüsse (14.1, 15.1) der Ziffer 1 beider 4er-Gruppen (10.1, 10.2) über einen Leiter (17) miteinander verbunden sind, und wobei im Leiter (17) zwischen den Anschlüssen für die Ziffern 10 und 11 ein Sperrglied in Form eines weiteren Tristate-Buffers (18) angeordnet ist.
